Europäisches Patentamt

European Patent Office

Office européen des brevets

(11) Veröffentlichungsnummer: **0 418 732 A1**

## EUROPÄISCHE PATENTANMELDUNG

(21) Anmeldenummer: 90117634.7

(22) Anmeldetag: 13.09.90

(51) Int. Cl.⁵: **F16J 15/32**, F16J 15/16, F16J 15/56

(30) Priorität: 16.09.89 DE 3931030

(43) Veröffentlichungstag der Anmeldung:
27.03.91 Patentblatt 91/13

(84) Benannte Vertragsstaaten:
GR

(71) Anmelder: **Busak + Luyken GmbH & Co.**
**Handwerkstrasse 5-7**
**W-7000 Stuttgart 80(DE)**

(72) Erfinder: **Edlund, Roy**
**Handwerkstrasse 5-7**
**W-7000 Stuttgart 80(DE)**
Erfinder: **Böhler, Wolfgang**
**Alfons-Härtel-Weg 7**
**W-7000 Stuttgart 80(DE)**

(74) Vertreter: **Patentanwälte Kohler - Schwindling**
**- Späth**
**Hohentwielstrasse 41**
**W-7000 Stuttgart 1(DE)**

(54) Dichtungsanordnung.

(57) Eine Dichtung besteht aus einem Dichtkantenring (1) und einem koaxial zum Dichtkantenring (1) angeordneten Spannring (2). Der Dichtkantenring (1) weist - in axialer Richtung gesehen - im Bereich seiner Mitte eine Stufe (13) auf. Am Übergang von einer Stirnfläche (14) der Stufe (13) zu einer Kegelfläche (15) ist eine Dichtkante (5) angeordnet. Der Dichtkantenring (1) liegt mit einer Fläche (19), die zum Niederdruckbereich hin weist, nahezu über der gesamten Tiefe an einer ersten Nutflanke (17) an. Ein Abschnitt (18) weist eine axiale Länge auf, die dadurch endet, daß der Spannring (2) am Dichtkantenring (1) anliegend an den Abschnitt (18) angrenzt.

Die axiale Erstreckung des Abschnitts (18) ist so gewählt, daß die Summe der Momente um die Dichtkante (5) bestehend aus elastomerem Moment und hydraulischen Momenten ungefähr Null ergibt.

Fig.1

EP 0 418 732 A1

## DICHTUNGSANORDNUNG

Die Erfindung geht aus von einer Anordnung zum Abdichten des Spaltes zwischen zwei zueinander konzentrischen, gegeneinander beweglichen Maschinenteilen, mit einem Dichtkantenring aus einem zähelastischen Kunststoff als Berührungsdichtung zwischen einem eine Nut aufweisenden ruhenden ersten und einem bewegten zweiten Maschinenteil und einem den Dichtkantenring radial spannenden und gegenüber der Nut im ersten Maschinenteil abdichtenden, gummielastischen Spannring, wobei die dem zweiten Maschinenteil zugewandte Fläche des Dichtkantenringes - in axialer Richtung gesehen - im Bereich ihrer Mitte eine Stufe aufweist, deren Stirnfläche dem Hochdruckbereich zugewandt ist und von der Stufe ausgehend zum Niederdruckbereich hin eine sich um einen Keilwinkel öffnende Kegelfläche bildet, so daß sich zwischen der Kegelfläche und der Stirnfläche der Stufe eine Dichtkante befindet, daß der Dichtkantenring mit einer dem Niederdruckbereich zugewandten Fläche eines Abschnitts an einer ersten Nutflanke anliegt, daß die Länge der rechtwinklig zur Achse des zweiten Maschinenteils verlaufenden Fläche 85% bis 95% der Tiefe der ersten Nutflanke beträgt und daß die axiale Länge des Abschnitts endet, indem der Spannring am Dichtkantenring anliegend an den Abschnitt angrenzt, daß der Abschnitt eine erste Umfangsfläche aufweist, die zu eienr zweiten Umfangsfläche des Dichtkantenrings versetzt ist und der Spannring am Nutgrund, an der zweiten Umfangsfläche und an einem der Fläche abgewandten Flächenabschnitt anliegt.

Eine derartige Dichtung ist durch die GB 2 202 285 A bekanntgeworden.

Die bekannte Dichtungsanordnung weist einen Radialflansch auf, der über einen weiten Bereich an der Niederdruckseite einer Nutflanke anliegt. Aufgrund dieser konstruktiven Ausgestaltung des Dichtringes lassen sich Reibkräfte erzeugen, die trotz der relativen Drehbewegung der Maschinenteile verhindern, daß der Dichtring mit dem rotierenden Maschinenteil gemeinsam rotiert. Der Dichtring ist damit in der Nut fest fixiert und wird nicht nur über Reibkräfte zwischen Spannring und Dichtring in Position gehalten.

Der bekannte Dichtring hat den Nachteil, daß sein lang und schlank ausgeformter Radialflansch, der sich nur über eine kurze axiale Länge des Dichtringes erstreckt, nur ein geringes Torsionswiderstandsmoment aufweist. Bei größeren hydraulischen Drücken kann der Dichtring zur Niederdruckseite hin kippen und die Reibungswerte steigen mit zunehmender Auflagefläche des niederdruckseitigen konischen Teiles des Dichtringes auf der rotierenden Umfangsfläche des Maschinenteiles an. Damit verstärkt sich die Wärmeentwicklung zwischen Maschinenteil und Dichtungsanordnung, und der Verschleiß des Dichtringes nimmt zu. Im abzudichtenden Bereich stellt sich mit zunehmender Standzeit eine verstärkte Leckage ein. Auch durch die axiale Lage des Spannringes zum Dichtring ist mit zunehmendem hydraulischen Druck auch mit einer größeren Anpreßkraft zu rechnen, mit der der Dichtring an das rotierende Maschinenteil angepreßt wird.

Weiterhin ist aus der DE-AS 23 25 000 eine Dichtung bekannt, bei der ein Dichtkantenring mit einem geeigneten Spannring zusammenwirkt. Bei dieser Dichtungsanordnung werden hochdruckseitig große Pressungsgradienten an der Dichtkante erreicht. Niederdruckseitig ergeben sich flache Pressungsgradienten. Damit läßt sich in der Regel eine geringe Leckage erzielen. Hydrauliköl aus dem Niederdruckbereich wird bei einfahrender ffolbenstange gegen den abzudichtenden Druck in den Druckraum gefördert und mit der bekannten Dichtung ist es sogar möglich, daß auch gegen hohe Betriebsdrücke mehr Öl in den Druckraum gepumpt werden kann, als bei ausfahrender Kolbenstange vom Hochdruckbereich in den Niederdruckbereich geschleppt wird. Allerdings ist die bekannte Dichtung sehr einbauempfindlich. Die spitzwinklige Dichtkante des Dichtkantenrings wird bei dem Einbau oftmals beschädigt. Größere Leckagen und kurze Standzeiten sind die Folge.

Aus DE-PS 32 25 906 ist eine Dichtung bekanntgeworden, die eine stumpfwinklige Dichtkante aufweist und ein besseres Leckageverhalten zeigt. Am Übergang von der Stirnfläche der Stufe zur Kegelfläche befindet sich eine Ringfläche, die die Form einer sich zum Hochdruckbereich hin öffnenden Kegelfläche hat, so daß eine stumpfwinklige Dichtkante entsteht, mit der der Dichtkantenring an der Gegenlauffläche des bewegten Maschinenteils anliegt. Die Dichtkante ist gegenüber der Stirnfläche der Stufe zum Niederdruckbereich hin leicht versetzt.

Bei den bekannten Dichtungen ist nicht auszuschließen, daß der Dichtkantenring unter Druckbeaufschlagung kippt, d.h. der Dichtkantenring dreht sich um die Dichtkante in den Niederdruckbereich. Die sich zum Niederdruckbereich hin öffnende Kegelfläche wird geschlossen, der Keilwinkel geht gegen 0° und die Kegelfläche liegt an der Gegenlauffläche des bewegten Maschinenteils an. Die Laufspurbreite der bekannten Dichtungen auf der Gegenlauffläche der hin- und herbewegten Kolbenstangen nimmt zu und insbesondere bei kleinen Gleitgeschwindigkeiten ergeben sich gerade bei eingelaufenen Dichtungen hohe Reibkräfte.

Der Erfindung liegt daher die Aufgabe zugrunde, eine Dichtung der eingangs genannten Art dahingehend weiterzubilden, daß auch bei Druckbelastung ein Rippen der Dichtung um den Drehpunkt "Dichtkante" verhindert wird und weitgehend druckunabhängig konstante Reibwerte erreicht werden.

Diese Aufgabe wird erfindungsgemäß dadurch gelöst, daß der Abschnitt eine axiale Länge aufweist, die größer als die halbe axiale Länge von der niederdruckseitigen Nutflanke bis zur Dichtkante des Dichtkantenringes ist, und daß der geometrische Schwerpunkt des Querschnitts des Spannringes gegenüber der Dichtkante um mindestens 10 % der axialen Länge des Dichtkantenringes in Richtung Hochdruckbereich versetzt ist.

Der erfindungsgemäße Dichtkantenring hat damit den wesentlichen Vorteil, daß er nicht nur die im Niederdruckbereich befindliche Nutflanke nahezu über ihre gesamte Tiefe als Auflager nutzt, sondern auch durch eine große Steifigkeit einem Kippmoment entgegenwirken kann. Der Dichtkantenring wird durch die großflächige Anlage an der Nutseitenfläche, die im Niederdruckbereich liegt, gehindert, sich zur bewegenden Fläche hin zu verdrehen. Der vorgegebene Keilwinkel bleibt auch bei größeren Kippmomenten zum Niederdruckbereich hin aufrechterhalten, weil der erfindungsgemäße Dichtkantenring durch seine axiale Länge eine große Lagestabilität aufweist. Ferner wird die Querschnittsform des erfindungsgemäßen Dichtkantenrings mit zunehmender axialer Länge des Abschnitts mehr und mehr versteift, so daß die Querschnittsform des Dichtkantenrings durch an ihm wirkende Momente nicht wesentlich deformiert wird. Hinzu kommt noch, daß der Spannring durch die axiale Länge des Abschnitts zum Hochdruckbereich hin verschoben wird. Er überträgt damit den überwiegenden Anteil seiner über ihn auf den erfindungsgemäßen Dichtkantenring wirkende Kraft im Hochdruckbereich auf Teilbereiche des Dichtkantenringes, die vom Hochdruckbereich aus gesehen, vor der Dichtkante liegen. Damit wird erreicht, daß die Summe der Momente aus elastomerer Vorspannkraft, hydraulischer Kraft aus der Differenz der Flächen von innerer und äußerer Mantelfläche am Dichtkantenring vor der Dichtkante zur Hochdruckseite hin und hydraulischer Kraft, die durch die hydraulische Beaufschlagung des Spannringes auf den Dichtkantenring entsteht, jeweils multipliziert mit dem entsprechenden Hebelarm, unabhängig vom Mediumdruck nahezu Null ist. Der erfindungsgemäße Dichtkantenring ist damit in der Nut mit großer Lagestabilität angeordnet.

Die Formsteifigkeit des Dichtkantenrings ist zum einen über die Wahl der axialen Länge des Abschnittes beeinflußbar und zum anderen kann der Spannring über die axiale Ausdehnung des Abschnitts axial definiert positioniert werden.

In weiterer Ausgestaltung der Erfindung weist der Abschnitt eine erste Umfangsfläche auf, die zu einer zweiten Umfangsfläche des Dichtkantenringes versetzt ist und der Spannring liegt am Nutgrund, an der zweiten Umfangsfläche und an einem der Fläche abgewandten Flächenabschnitt an.

Dies hat den Vorteil, daß die Fläche des Dichtkantenrings, die im Niederdruckbereich an der Nutseitenfläche zur Anlage kommt, im druckbeaufschlagten Zustand nicht nur über die auf die Stirnfläche und die Ringfläche des Dichtkantenrings wirkenden Kräfte an die Nutseitenfläche gedrückt wird, sondern auch über die vom Spannring auf den Dichtkantenring axial übertragene Kraft. Der Dichtkantenring liegt breitflächig über nahezu der gesamten Nuttiefe am ruhenden ersten Maschinenteil an und eine große Reibkraft wirkt möglichen radialen Verschiebungen des Dichtkantenringes entgegen.

Weiterhin kann über den Spannring eine Pressung des Dichtkantenrings an die Gegenlauffläche des bewegten Maschinenteils erreicht werden, die der Druckentlastung - resultierend aus der Flächenkraft im Bereich der Stufe - mehr oder weniger entgegenwirkt. Wird der Spannring weiter zum Hochdruckbereich hin versetzt, so wird auch mit einem größeren Hebelarm, bezogen auf die Dichtkante, das auf den Dichtkantenring wirkende Moment größer. Der Spannring läßt sich weiter als bei bekannten Dichtungen in Richtung Hochdruckbereich verschieben, weil die Reibkraft aus der Anlage Nutflanke/Fläche im Niederdruckbereich und das torsionssteifere Profil auch Auslenkungen in Richtung Nutgrund entgegenwirkt.

Weist der Dichtkantenring an einer Ringfläche Nuten auf, die zum Hochdruckbereich hin offen sind, so ist stets gewährleistet, daß der Spannring auch bei einem Anliegen des Dichtkantenrings an der Nutseitenfläche im Hochdruckbereich druckbeaufschlagt ist.

In weiterer Ausgestaltung der Erfindung ist zwischen der den Keilwinkel bildenden Kegelfläche und einer Stufe des Dichtkantenrings eine konische Ringfläche angeordnet.

Dies hat den Vorteil, daß der erfindungsgemäße Dichtkantenring auch mit einer stumpfwinkligen Dichtkante versehen werden kann, die insgesamt ein besseres Leckageverhalten aufweist.

Weiterhin ist der Spannring von der zweiten Nutflanke beabstandet. Dies hat den Vorteil, daß der an der Dichtung anliegende Druck immer auch unmittelbar an der zum Hochdruckbereich hin gerichteten Stirnfläche des Spannrings anliegt. Dies gewährleistet, daß in jedem Betriebszustand auch eine axial gerichtete Kraft vom Spannring auf den Abschnitt übertragen wird.

In weiterer Ausgestaltung der Erfindung ist der Spannringquerschnitt weitgehend kreisförmig oder rechteckförmig oder er wird als Vierlippendichtring dem erfindungsgemäßen Dichtkantenring überlagert.

Dies hat den Vorteil, daß je nach Einsatz und feststehenden Betriebsparametern unterschiedliche und dennoch in Verbindung mit dem erfindungsgemäßen Dichtkantenring stets geeignete Spann ringe verwendet werden können. Die besondere Wirkungsweise der Dichtung bleibt aber stets erhalten, indem der Dichtkantenring auch unter ungünstigen Bedingungen eine sich zum Niederdruckbereich hin öffnende Kegelfläche aufweist.

Die erfindungsgemäße Dichtungsanordnung entspricht damit den erweiterten Anforderungen, die an Hydraulik-Stangendichtungen gestellt werden. In einem breiten Viskositätsbereich des Hydrauliköls sowie bei unterschiedlichen Gleitgeschwindigkeiten und abzudichtenden Drücken ergeben sich Reibkräfte, die bei einem guten Leckageverhalten eine gute Schmierung gegeneinander bewegter Körper, einen geringen Verschleiß und damit große Standzeiten gewährleisten. Weist der Abschnitt des Dichtkantenrings eine Umfangsfläche auf, an die sich ein schräg oder konkav verlaufender Flächenabschnitt anschließt und liegt der Spannring im druckbeaufschlagten Zustand am Nutgrund und an dem Flächenabschnitt an, so kann einerseits mit einfachen Maßnahmen die Eigensteifigkeit des Dichtkantenringes verbessert werden. Andererseits läßt sich durch einen konkav ausgebildeten Flächenabschnitt sicher vermeiden, daß der Spannring im druckbeaufschlagten Zustand zum Niederdruckbereich hin wandert oder unter Druck so stark verformt wird, daß sich seine auf den Dichtkantenring ausgeübte maximale resultierende Kraft aus dem Hochdruckbereich unkontrolliert zur Dichtkante hin verschiebt.

Weitere Vorteile ergeben sich aus der Beschreibung und der beigefügten Zeichnung. Ebenso können die vorstehend genannten und die noch weiter aufgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter.

Die Erfindung ist in der Zeichnung dargestellt und wird anhand von Ausführungsbeispielen in der Zeichnung näher erläutert. Es zeigen:

Fig. 1 einen Querschnitt der Dichtung mit einem erfindungsgemäßen Dichtkantenring und einem Spannring in einem ruhenden Maschinenteil, das mit einem bewegten Maschinenteil zusammenwirkt;

Fig. 2 ein zweites Ausführungsbeispiel der Dichtung im Querschnitt mit einem erfindungsgemäßen Dichtkantenring, der an seiner Stirnseite im Hochdruckbereich Nuten aufweist;

Fig. 3 ein drittes Ausführungsbeispiel der Dichtung im Querschnitt mit einem erfindungsgemäßen Dichtkantenring, der eine stumpfwinklige Dichtkante aufweist;

Die einzelnen Figuren der Zeichnung zeigen teilweise stark schematisiert den erfindungsgemäßen Gegenstand und sind nicht maßstäblich zu verstehen. Die Gegenstände der einzelnen Figuren sind teilweise vergrößert dargestellt, damit ihr Aufbau besser gezeigt werden kann.

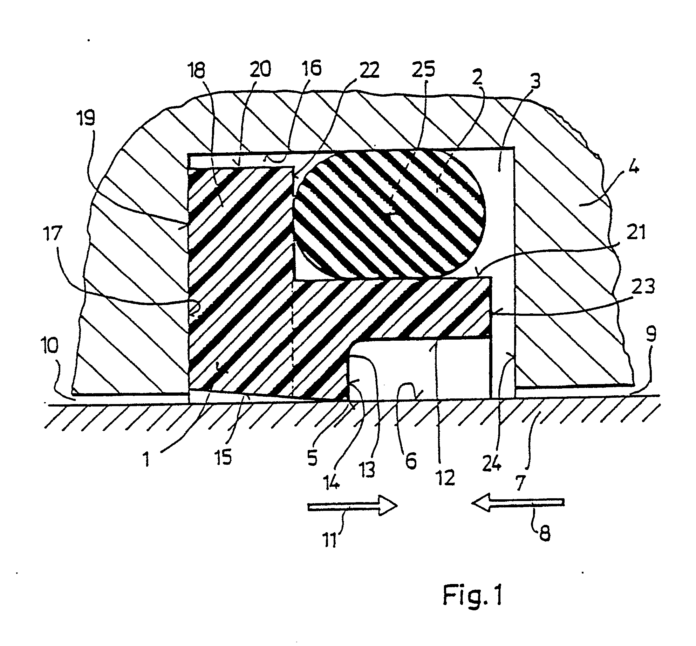

Die in Fig. 1 dargestellte Dichtung besteht aus einem Dichtkantenring 1 und einem koaxial zu dem Dichtkantenring 1 angeord neten Spannring 2. Der Dichtkantenring 1 besteht aus einem zähelastischen Kunststoff auf der Basis von Polytetrafluorethylen und der Spannring aus einem gummielastischen Material. Die beiden Ringe sind in eine Nut 3 eines ersten Maschinenteils 4 eingelegt, das als ruhendes Maschinenteil bezeichnet wird, weil die Dichtung gegenüber diesem Maschinenteil keine Bewegungen ausführt. Der gummielastische Spannring 2 übt auf den Dichtkantenring 1 eine radial gerichtete Spannkraft aus und dichtet ihn gegenüber der Nut 3 im ersten Maschinenteil 4 ab. Mit einer Dichtkante 5 liegt der Dichtkantenring 1 an einer Gegenlauffläche 6 eines bewegten zweiten Maschinenteils 7 an. Das zweite Maschinenteil 7, z.B. eine Kolbenstange, kann in pfeilrichtung 8 aus einem Hochdruckbereich 9 in einen Niederdruckbereich 10 gefahren werden. Die Bewegung des zweiten Maschinenteils 7 in pfeilrichtung 8 wird als Ausfahrvorgang bezeichnet. Wird das zweite Maschinenteil 7 in Pfeilrichtung 11 bewegt, so handelt es sich um einen Einfahrvorgang, d.h. ein druckloser Hydraulikölfilm auf der Gegenlauffläche 6 wird über die Druckbarriere der Dichtpressung in den Hochdruckbereich 9 gefördert.

Der Dichtkantenring 1 weist - vom Hochdruckbereich aus gesehen eine zylindrische Mantelfläche 12 auf, die Teil einer Stufe 13 ist. Die Mantelfläche 12 grenzt an eine Stirnfläche 14. Am Übergang der Stirnfläche 14 zu einer Kegelfläche 15, die die Form einer sich zum Niederdruckbereich 10 hin öffnenden Regelfläche 15 hat, die mit der Gegenlauffläche 6 einen Winkel von bevorzugt 7° bis 15° bildet, ist die Dichtkante 5 angeordnet, mit der der Dichtkantenring 1 an der Gegenlauffläche 6 des zweiten Maschinenteiles 7 anliegt. Die Dichtkante 5 befindet sich im Bereich der axialen Mitte des Dichtkantenrings 1 und an einer Stelle, an der die Anpresskraft des Spannringes 2 nicht ein Maximum hat. Das Maximum der Anpresskraft des Spann ringes 2 entsteht axial versetzt zu der Dichtkante 5 im Hochdruckbereich 9.

Der Dichtkantenring 1 ist von einem Nutgrund 16 beabstandet. An einer ersten Nutflanke 17 der Nut 3 liegt der Dichtkantenring 1 mit einem Abschnitt 18, der eine Fläche 19 aufweist, an. Im eingebauten Zustand der Dichtung liegt der Dichtkantenring 1 in der Nut 3 nur an der ersten Nutflanke 17 an. Die Abgrenzung des Abschnitts 18 im Dichtkantenring 1 ist in der Fig. gestrichelt eingezeichnet.

Der Abschnitt 18 weist eine zu dem Nutgrund 16 hin weisende erste Umfangsfläche 20 auf, die gegenüber einer zweiten Umfangsfläche 21 versetzt ist. Die erste Umfangsfläche 20 ist mit der zweiten Umfangsfläche 21 über einen Flächenabschnitt 22 verbunden. Im Ausführungsbeispiel der Fig. 1 bilden der Flächenabschnitt 22 und die zweite Umfangsfläche 21 eine Schulter. An die zweite Umfangsfläche 21 grenzt eine Ringfläche 23, die von einer zweiten Nutflanke 24 im Hochdruckbereich 9 beabstandet ist. Nach ordnungsgemäßem Einbau der Dichtung ergibt sich somit ein Durchgang zwischen der Ringfläche 23 und der zweiten Nutflanke 24.

Der Spannring 2 weist einen geometrischen Schwerpunkt 25 auf, der gegenüber der Dichtkante 5 in Richtung Hochdruckbereich versetzt ist. Der axiale Abstand des geometrischen Schwerpunkts 25 von der Dichtkante 5 beträgt im nicht druckbeaufschlagten Zustand mindestens 10% der axialen Gesamtlänge des Dichtkantenringes 1. Mit dieser Anordnung des Spannringes 2 am Dichtkantenring 1 wird erreicht, daß das Maximum der Anpresskraft des Spannringes 2 versetzt von der Dichtkante 5 im Hochdruckbereich 9 liegt.

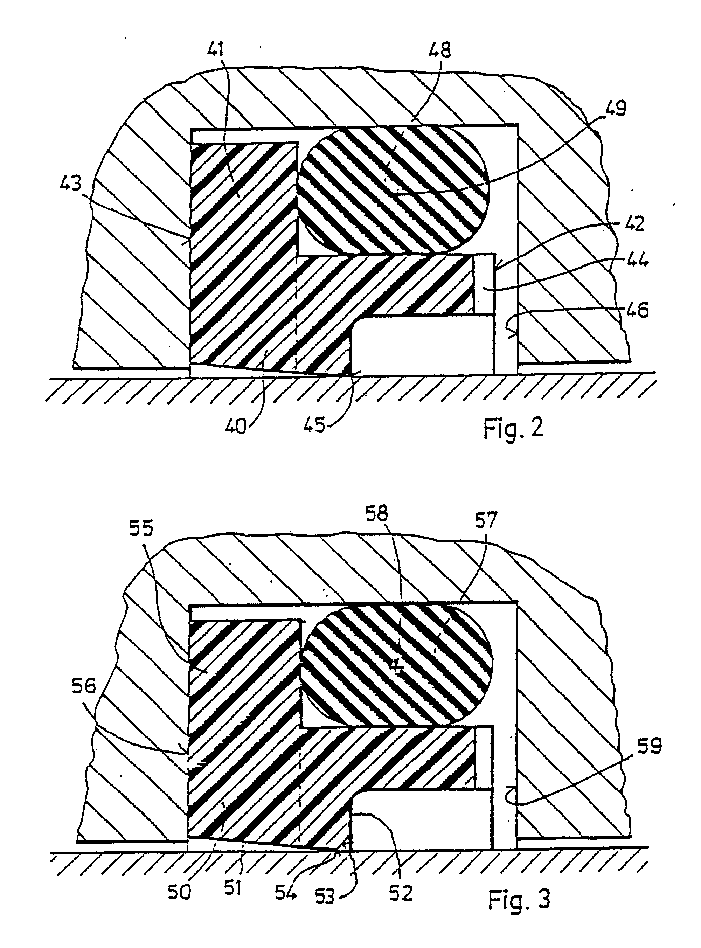

Fig. 2 zeigt ein weiteres Ausführungsbeispiel einer Dichtung im Querschnitt mit einem Dichtkantenring 40, der einen Abschnitt 41 aufweist. Die Abgrenzung des Abschnitts 41 im Dichtkantenring 40 ist in der Figur gestrichelt eingezeichnet. Zum Hochdruckbereich hin ist der Dichtkantenring 40 durch eine Ringfläche 42 und zum Niederdruckbereich hin durch eine Fläche 43 abgegrenzt. In der Ringfläche 42 sind Nuten 44 vorgesehen, die längs zu der Nutflanke verlaufen und mit ihren stirnseitigen Öffnungen zum Nutgrund wie auch zur Gegenlauffläche hinweisen. Der Dichtkantenring 40 weist eine spitze Dichtkante 45 auf, die auf der Gegenlauffläche eines bewegten Körpers anliegt. Bei ordnungsgemäßem Einbau der Dichtung ist der Dichtkantenring 40 stets von einer zweiten Nutflanke 46 beabstandet. Sollte sich der Dichtkantenring 40 in der Nut zum Hochdruckbereich hin verschieben, so daß die Ringfläche 42 an der zweiten Nutflanke 46 zur Anlage kommt, so ist durch die Nuten 44 stets ein offener Durchgang zum Spannring 48 gegeben. Fehlfunktionen, die dadurch bedingt sind, daß durch ein Verschieben des Dichtkantenrings 40 in der Nut eine Druckbeaufschlagung des Spannrings 48 verhindert wird, kann durch die konstruktive Ausgestaltung des Dichtkantenrings 40 mit Nuten 44 ausgeschlossen werden. Der Spannring 48 weist einen geometrischen schwerpunkt 49 auf, der wiederum gegenüber der Dichtkante 45 in Richtung Hochdruckbereich versetzt ist. Im Bereich des geometrischen Schwerpunktes 49 hat die Anpresskraft des Spannrings 48 ein Maximum.

Fig. 3 zeigt einen weiteren Dichtkantenring 50, der zur Gegenlauffläche hin eine Kegelfläche 51 aufweist, die mit einer Stufe 52, an die sich eine konische Ringfläche 53 anschließt, eine Dichtkante 54 bildet. Die Dichtkante 54 ist stumpfwinklig ausgestaltet und somit einbauunempfindlich. Mit einem Abschnitt 55, der eine Fläche 56 aufweist, liegt der Dichtkantenring 50 an der Nutseitenfläche im Niederdruckbereich an. Als Nebendichtung ist ein Spannring 57 mit einem geometrischen Schwerpunkt 58 derart an dem Dichtkantenring 50 angeordnet, daß der Spannring 57 ein Moment erzeugt, das einem Verschwenken des Dichtkantenrings 50 mit der Kegelfläche 51 zur Gegenlauffläche des hin- und herbewegten Körpers entgegenwirkt. Sowohl der Dichtkantenring 50 als auch der Spannring 57 sind von einer zweiten Nutflanke 59 im Hochdruckbereich beabstandet, so daß das Druckmedium stets in vollem Umfang den Spannring 57 und den Dichtkantenring 50 anströmen kann.

Wie die Ausführungsbeispiele in den Figuren 1 bis 3 beispielhaft zeigen, sind zahlreiche Modifikationen am erfindungsgemäßen Dichtkantenring selbst und an dem mit dem Dichtkantenring zusammenwirkenden Spannring möglich, um die erfindungsgemäße Dichtung der jeweiligen Anwendung anzupassen. So kann der Abschnitt, an dem der Spannring am jeweiligen Dichtkantenring anliegt, als Schulter, Schräge oder aber als konkaver Flächenabschnitt ausgebildet sein. Als Spannringe kommen im Querschnitt weitgehend kreisförmige oder rechteckförmige zum Einsatz. Der erfindungsgemäße Dichtkantenring kann aber auch in Verbindung mit einem Vierlippendichtring eingesetzt werden.

Eine Dichtung besteht aus einem Dichtkantenring 1 und einem koaxial zum Dichtkantenring 1 angeordneten Spannring 2. Der Dichtkantenring 1 weist - in axialer Richtung gesehen - im Bereich seiner Mitte eine Stufe 13 auf. Am Übergang von einer Stirnfläche 14 der Stufe 13 zu einer Kegelfläche 15 ist eine Dichtkante 5 angeordnet. Der Dichtkantenring 1 liegt mit einer Fläche 19, die zum Niederdruckbereich hin weist, nahezu über der gesamten Tiefe an einer ersten Nutflanke 17 an. Ein Abschnitt 18 weist eine axiale Länge auf, die dadurch endet, daß der Spannring 2 am Dichtkantenring 1 anliegend an den Abschnitt 18 angrenzt.

Die axiale Erstreckung des Abschnitts 18 ist so gewählt, daß die Summe der Momente um die Dichtkante 5 bestehend aus elastomerem Moment und hydraulischen Momenten ungefähr Null ergibt.

## Ansprüche

1. Anordnung zum Abdichten des Spaltes zwischen zwei zueinander konzentrischen, gegeneinander beweglichen Maschinenteilen, mit einem Dichtkantenring (1; 40; 50) aus einem zähelastischen Kunststoff als Berührungsdichtung zwischen einem eine Nut (3) aufweisenden ruhenden ersten und einem bewegten zweiten Maschinenteil (4, 7) und einem den Dichtkantenring (1; 40; 50) radial spannenden und gegenüber der Nut (3) im ersten Maschinenteil (4) abdichtenden, gummielastischen Spannring (2), wobei die dem zweiten Maschinenteil (7) zugewandte Fläche des Dichtkantenringes (1; 40; 50) - in axialer Richtung gesehen im Bereich ihrer Mitte eine Stufe (13) aufweist, deren Stirnfläche (14) dem Hochdruckbereich (9) zugewandt ist und von der Stufe (13) ausgehend zum Niederdruckbereich (10) hin eine sich unter einem Keilwinkel öffnende Kegelfläche (15) bildet, so daß sich zwischen der Kegelfläche (15) und der Stirnfläche (14) der Stufe (13) eine Dichtkante (5) befindet, daß der Dichtkantenring (1; 40; 50) mit einer dem Niederdruckbereich (10) zugewandten Fläche (19; 43; 56) eines Abschnitts (18; 41; 55) an einer ersten Nutflanke (17) anliegt, daß die Länge, der rechtwinklig zur Achse des zweiten Maschinenteils (7) verlaufenden Fläche (19; 43; 56) 85% bis 95% der Tiefe der ersten Nutflanke (17) beträgt und daß die axiale Länge des Abschnitts (18; 41; 55) endet, indem der Spannring (2) am Dichtkantenring (1) anliegend an den Abschnitt (18; 41; 55) angrenzt, daß der Abschnitt (18) eine erste Umfangsfläche (20) aufweist, die zu einer zwei ten Umfangsfläche (21) des Dichtkantenringes (1) versetzt ist und der Spannring (2) am Nutgrund (16), an der zweiten Umfangsfläche (21) und an einem der Fläche (19) abgewandten Flächenabschnitt (22) anliegt, dadurch gekennzeichnet, daß der Abschnitt (18; 41; 55) eine axiale Länge aufweist, die größer als die halbe axiale Länge von der niederdruckseitigen Nutflanke bis zur Dichtkante (5; 45; 54) des Dichtkantenringes (1; 30; 40; 50) ist und daß der geometrische Schwerpunkt (25; 49; 58) des Querschnitts des Spannringes (2; 48; 57) gegenüber der Dichtkante (5; 45; 54) um mindestens 10% der axialen Länge des Dichtkantenringes (1; 40; 50) in Richtung Hochdruckbereich (9) versetzt ist.

2. Dichtung nach Anspruch 1, dadurch gekennzeichnet, daß der Dichtkantenring (40; 50) an einer Ringfläche (42) Nuten (44) aufweist.

3. Dichtung nach einem der Ansprüche 1 bis 2, dadurch gekennzeichnet, daß zwischen der den Keilwinkel, bevorzugt ein Winkel zwischen 7° und 15°, bildenden Kegelfläche (51) und einer Stufe (52) des Dichtkantenrings (50) eine konische Ringfläche (53) angeordnet ist.

4. Dichtung nach einem der Ansprüche 1 bis 3, dadurch gekennzeichnet, daß der Spannring (2; 48; 57) von der zweiten Nutflanke (24; 46; 59) beabstandet ist.

5. Dichtung nach einem der Ansprüche 1 bis 4, dadurch gekennzeichnet, daß der Spannring (2, 48; 57) im Querschnitt weitgehend kreisförmig ist.

6. Dichtung nach einem der Ansprüche 1 bis 5, dadurch gekennzeichnet, daß der Spannring (2: 48; 57) rechteckförmig oder ein Vierlippendichtring ist.

Fig. 1

Fig. 2

Fig. 3

Europäisches
Patentamt

**EUROPÄISCHER
RECHERCHENBERICHT**

Nummer der Anmeldung

**EP 90 11 7634**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,P | EP-A-0 362 510  (BUSAK + LUYKEN) <br> * Spalte 7, Zeile 46 - Spalte 8, Zeile 43; Figur 5 * <br> – – – | 1,3-4,6 | F 16 J 15/32 <br> F 16 J 15/16 <br> F 16 J 15/56 |
| A,D | GB-A-2 202 285  (DANFOSS) <br> * Zusammenfassung; Figuren * <br> – – – | 1 | |
| A | DE-A-3 606 886  (BUSAK + LUYKEN) <br> * Zusammenfassung; Figur 7 * * Spalte 8, Zeilen 46 - 51 * <br> – – – – – | 1,3-5,2 | |

|  |  |  | **RECHERCHIERTE SACHGEBIETE (Int. Cl.5)** |
|---|---|---|---|
|  |  |  | F 16 J |

**Der vorliegende Recherchenbericht wurde für alle Patentansprüche erstellt**

| Recherchenort | Abschlußdatum der Recherche | Prüfer |
|---|---|---|
| Den Haag | 07 Dezember 90 | NARMINIO A. |